# EUROPEAN PATENT APPLICATION

(11) **EP 4 092 523 A1**
(43) Date of publication of application: **23.11.2022**
(21) Application number: 20913703.3
(22) Date of filing: 08.12.2020
(51) Int. Cl.: G06F 8/61

(54) **SOFTWARE MANAGEMENT METHOD AND APPARATUS, AND MANAGEMENT DEVICE AND STORAGE MEDIUM**

(30) Priority: 16.01.2020 CN 202010048636
(71) Applicant: ZTE Corporation, Shenzhen, Guangdong 518057 (CN)
(72) Inventor: ZHU, Weihong, Shenzhen, Guangdong 518057 (CN)
(74) Representative: Ricker, Mathias
(86) International application number: PCT/CN2020/134524
(87) International publication number: WO 2021/143398

(57) **Abstract**

Provided are a software management method and apparatus, a management apparatus, and a storage medium. The software management method includes: management information of a software management object class is acquired, where the software management object class includes a capability management object class and a control management object class, the management information includes capability information corresponding to a managed network function set based on the capability management object class and operation information corresponding to the managed network function set based on the control management object class; and a software of the managed network function is managed according to the management information of the software management object class.

## Description

The present application claims priority to Chinese Patent Application No. 202010048636.9, filed with the China National Intellectual Property Administration (CNIPA) on Jan. 16, 2020, disclosure of which is incorporated herein by reference in its entirety.

### TECHNICAL FIELD

The present application relates to wireless communication networks and, for example, to a software management method and apparatus, a management device, and a storage medium.

### BACKGROUND

A network slice refers to an instantiated complete logical network composed of a set of network functions (including network resources supporting the network functions) and having specific network characteristics. The network slice is used for satisfying the requirement of a specific network traffic, and is an important part of the fifth generation (5G) mobile communication system. Each network function provides a corresponding function by running a corresponding network function software, and the network function software needs to be installed when just joining the network and possibly needs to be upgraded in a network running process. Both a network architecture and a network management architecture are a service-based architecture, and an effective software management mechanism is lacked to reliably manage the network function software.

### SUMMARY

The present application provides a software management method and apparatus, a management device, and a storage medium, to improve the reliability of software management.

An embodiment of the present application provides a software management method. The software management method includes: management information of a software management object class is acquired, where the software management object class includes a capability management object class and a control management object class, the management information includes capability information corresponding to a managed network function set based on the capability management object class and operation information corresponding to the managed network function set based on the control management object class; and a software of the managed network function is managed according to the management information of the software management object class.

An embodiment of the present application provides a software management apparatus. The software management apparatus includes an information acquisition module and a management module. The information acquisition module is configured to acquire management information of a software management object class, where the software management object class includes a capability management object class and a control management object class, the management information includes capability information corresponding to a managed network function set based on the capability management object class and operation information corresponding to the managed network function set based on the control management object class. The management module is configured to manage a software of the managed network function according to the management information of the software management object class.

An embodiment of the present application provides a management device. The management device includes one or more processors and a storage apparatus. The storage apparatus is configured to store one or more programs. The one or more processors, when executed by the one or more processors, cause the one or more processors to implement the software management method described above.

An embodiment of the present application further provides a computer-readable storage medium. The computer-readable storage medium stores a computer program, where the program, when executed by a processor, implements the software management method described above.

### BRIEF DESCRIPTION OF DRAWINGS

FIG. 1 is a flowchart of a software management method provided in an embodiment;
FIG. 2 is a flowchart of a software management method provided in another embodiment;
FIG. 3 is a flowchart of a software management method provided in yet another embodiment;
FIG. 4 is a schematic structural diagram of a software management apparatus provided in an embodiment; and
FIG. 5 is a schematic diagram of a hardware structure of a management device provided in an embodiment.

### DETAILED DESCRIPTION

The present application will be described in conjunction with the drawings and embodiments below. It should be understood that the specific embodiments described herein are merely used for explaining the present application and are not intended to limit the present application. It should be noted that, the embodiments and features of the embodiments in the present application may be arbitrarily combined with each other without conflict. In addition, it should also be noted that, for ease of description, only some, but not all, of the structures related to the present application are shown in the drawings.

In a 5G system, in order to facilitate management of a network slice, the network slice may be decomposed into sub-slices (network slice subnets), the sub-slice refers to one logical network consisting of a set of network functions and network resources supporting the network functions and having specific network characteristics. One network slice may contain 0, 1, or more sub-slices. The management and orchestration of the sub-slices is done by a network slice subnet management function (NSSMF). The NSSMF completes instantiation of the sub-slice and control management of the life cycle of the sub-slice according to the definition of a blueprint of the sub-slice. A concept of the sub-slice is equivalent to a network-managed sub-network, the sub-slice or the sub-network consists of one or more network functions. Each network function provides a corresponding function by running a corresponding network function software, and the network function software needs to be installed when just joining the network and possibly needs to be upgraded in a network running process. Both a network architecture and a network management architecture are a service-based architecture, and an effective software management mechanism is lacked to reliably manage the network function software.

According to the software management method provided in the embodiments of the present application, capability information and operation information corresponding to a managed network function are set through a software management object class, operations such as a software installation or a software upgradation of the managed network function are controlled, and thus the reliable management of the network function software is realized.

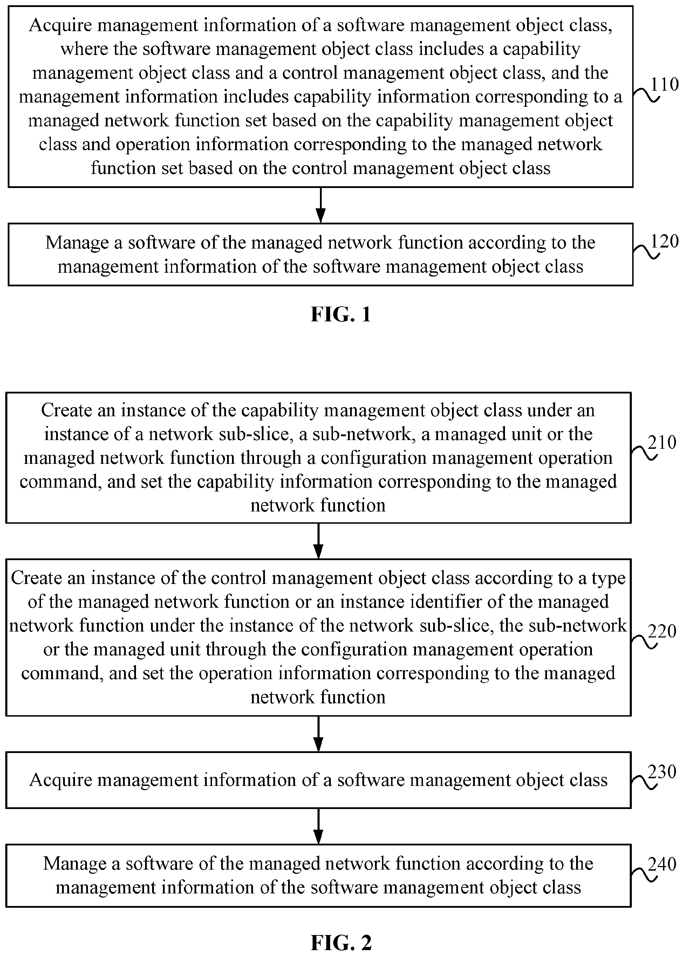

FIG. 1 is a flowchart of a software management method provided in an embodiment. The method is performed by a network management function provider. As shown in FIG. 1, the method provided in this embodiment includes operation 110 and operation 120.

In operation 110, management information of a software management object class is acquired, where the software management object class includes a capability management object class and a control management object class, and the management information includes capability information corresponding to a managed network function set based on the capability management object class and operation information corresponding to the managed network function set based on the control management object class.

In operation 120, a software of the managed network function is managed according to the management information of the software management object class.

In this embodiment, the capability information mainly refers to a software capability of the managed network function, and includes a software version, an operation type and the like supported by the managed network function; the operation information mainly refers to that what operation should be specifically executed for the software of the managed network function, such as an installation, an upgradation, an update or a repair. The capability information and the operation information are respectively set based on the capability management object class and the control management object class, so that the systematic management of the managed network function software is realized.

In an embodiment, the capability information corresponding to the managed network function includes at least one of: a software version supported by an instance of the managed network function, where a number of software versions is at least one; an installing step or an upgrading step of the software; or a breakpoint attribute before each installing step or each upgrading step, where the breakpoint attribute includes a breakpoint can be set and a breakpoint cannot be set.

In this embodiment, the capability management object class (denoted as SwMCapability) for the software management is used for describing a certain type of network function (NEType) or the software capability which may be provided by an instance of one or more managed network functions, and the capability information may, for example, include one or more software versions supported by the managed network functions, and may also include an installing step or an upgrading step of the software, and whether breakpoints are allowed to be set before each installing step or each upgrading step, so that the indication and basis are provided for the automatic installation and upgradation of the software in a software management process.

In an embodiment, the operation information corresponding to the managed network function includes: a software version to be installed or upgraded; or a type of the managed network function or an instance identifier of the managed network function.

In this embodiment, a management process of a certain type of network function or an instance of one or more managed network functions, such as installation or upgradation according to certain steps, is controlled by the control management object class (denoted as SwMControl) for the software management. The operation information may include, for example, a software version to be installed or upgraded, the managed network function may support multiple software versions, but the installation or upgradation may only be for one of the software versions, which may be indicated by the operation information; and the operation information may also include a type of the managed network function or an instance identifier of the managed network function, so as to clarify which class or which software with the managed network function is managed.

In an embodiment, the operation information corresponding to the managed network function further includes at least one of an operation type or operation start time; where the operation type includes at least one of: an immediate operation; a timing operation; a resume operation; or a terminating operation.

In this embodiment, the operation type is used for setting the specific operation that the software of the managed network function needs to perform, for example, as follows.

The immediate operation indicates that: the installation or upgradation of the software is immediately started after the control management object class is instantiated.

The timing operation indicates that: the installation or upgradation of the software is started when a set time is reached.

The resume operation indicates that: in a case where the automatic installation or upgradation of the software is supported and an operation suspension operation exists, the operation is resumed in a case where the software is in a suspension state, and the next installation or upgradation is continued to be executed.

The terminating operation indicates that: a process of the installation or upgradation of the software is terminated.

In a case where the automatic installation or upgradation of the software is supported, the management of the control management object class may also include: specific operation steps, whether a breakpoint can be set before one or more steps, and the like.

In an embodiment, the management of the software of the managed network function may be based on two ideas. One idea is to implement the management of network functions by defining a corresponding management object class, instantiating the corresponding Management Object Class using a configuration management command (for example, create a management object instance (MOI), modify MOI attributes), and setting a corresponding attribute parameter of the management object class, such as TS 28.531, TS 28.532, TS 28.541, TS 28.622 according to the 3rd generation partnership project (3GPP); and another idea is to enable the management of network functions by defining a corresponding software management service and providing a corresponding interface, for example by defining a dedicated fault management service, a performance management service and a corresponding interface, etc., such as TS 28.531, TS 28.532, TS 28.545, TS 28.550 according to the 3GPP.

In an embodiment, before the management information of the software management object class is acquired, the method further includes: an instance of the capability management object class is created under an instance of a network sub-slice, a sub-network, a managed unit or the managed network function through a configuration management operation command, and the capability information corresponding to the managed network function is set; and an instance of the control management object class is created according to a type of the managed network function or an instance identifier of the managed network function under the instance of the network sub-slice, the sub-network or the managed unit through the configuration management operation command, and the operation information corresponding to the managed network function is set.

In this embodiment, the type of the managed network function or the software management capability that a specific instance has (e.g., a software version that may be installed or upgraded) contained under an instance of the network sub-slice or the sub-network (and sub-class thereof) or the managed unit is set by configuring a management operation command to include an instance of the capability management object class under the instance of the network sub-slice or sub-network (and sub-class thereof) or the managed unit, or the software management capability (such as, a software version that may be installed or upgraded, steps of installing or upgrading of the software, and whether or not breakpoints are allowed to be set) of the specific managed network function (and its subclass) instance are set by containing an instance of the capability management object class under an instance of the managed network function (and its sub-class). This setup process is performed by the network management function provider.

In this embodiment, the software management process may be initiated by creating an instance of the control management object class. An instance of the control management object class may be contained under instances of network sub-slices or sub-networks (and sub-classes thereof) or the managed unit. If the instance of the control management object class is an instance created according to a network function type, then the software management process acts on all instances conforming to the network function type below a management tree contained in the instances of the network sub-slices or sub-networks (and sub-classes thereof) or the managed unit; if the instance of the control management object class is an instance created according to the instance identifier, then this software management process will act on the instance of the managed network function specified by the instance identifier. The startup of the software management process may be implemented depending on the type of operation and/or the start time of operation, such as an immediate operation; a timing operation; a terminating operation; or a resume operation.

FIG. 2 is a flowchart of a software management method provided in another embodiment. According to the method, a corresponding management object class is defined, a configuration management command is used for instantiating the corresponding management object class, and an attribute parameter corresponding to the management object class is set, so that the management of a network function is realized.

As shown in FIG. 2, the method includes operations 210 to 240.

In operation 210, an instance of the capability management object class is created under an instance of a network sub-slice, a sub-network, a managed unit or the managed network function through a configuration management operation command, and the capability information corresponding to the managed network function is set.

In operation 220, an instance of the control management object class is created according to a type of the managed network function or an instance identifier of the managed network function under the instance of the network sub-slice, the sub-network or the managed unit through the configuration management operation command, and the operation information corresponding to the managed network function is set.

In operation 230, management information of a software management object class is acquired.

In operation 240, a software of the managed network function is managed according to the management information of the software management object class.

In an embodiment, before the management information of the software management object class is acquired, the method further includes: an instance of the control management object class is created through a first software management service interface, and the operation information corresponding to the managed network function is set; and an instance of the capability management object class is created through a second software management service interface, and the capability information corresponding to the managed network function is set.

In this embodiment, the software management is realized by adding software management services and providing related interfaces, and it specifically includes: the software management object class is defined; an instance of the control management object class is created through a first software management service interface (recorded as CreateSwMControl), and operation information corresponding to the managed network function is set, an instance of the capability management object class is created through the second software management service interface (recorded as CreateSwMCapability), and the capability information corresponding to the managed network function is set.

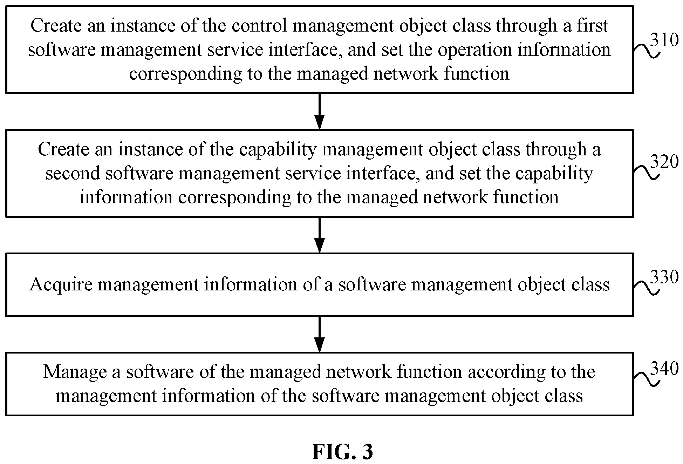

FIG. 3 is a flowchart of a software management method provided in yet another embodiment. According to the method, corresponding network management services are defined, and corresponding interfaces are provided, the management of a network function is achieved, for example, special fault management services, performance management services, corresponding interfaces and the like are defined. As shown in FIG. 3, the method includes operations 310 to 340.

In operation 310, an instance of the control management object class is created through a first software management service interface, and the operation information corresponding to the managed network function is set.

In operation 320, an instance of the capability management object class is created through a second software management service interface, and the capability information corresponding to the managed network function is set.

In operation 330, management information of a software management object class is acquired.

In operation 340, a software of the managed network function is managed according to the management information of the software management object class.

In an embodiment, that the software of the managed network function is managed according to the management information of the software management object class includes at least one of: an installation or upgradation of the software is started according to the operation information and the capability information through a third software management service interface; an installation or upgradation of the software is resumed according to the operation information and the capability information through a fourth software management service interface; an installation or upgradation of the software is terminated according to the operation information and the capability information through a fifth software management service interface; or an installation or upgradation of the software is fell back according to the operation information and the capability information through a sixth software management service interface.

For example, an installation or upgradation of the software of the managed network function is started through the third software management service interface (recorded as startSwM); an installation or upgradation of the software of the managed network function is resumed through the fourth software management service interface (recorded as resumeSwM); an installation or upgradation of the software of the managed network function is terminated through the fifth software management service interface (recorded as terminatedSwM); and an installation or upgradation of the software of the managed network function is fell back through the sixth software management service interface (recorded as fallbackSwM).

In an embodiment, the software management object class further includes a process management object class, where the process management object class is used for recording progress information of a software management process.

In this embodiment, the progress information of the executing software management process is provided by the process management object class (denoted as SwMPprocess), for example, the executed steps, an operation type, operation start time, end time, and execution of each installation or upgradation step (such as, completed, not started, executing, paused, failed, terminated) are recorded.

In an embodiment, before the software of the managed network function is managed according to the management information of the software management object class, the method further includes: an instance of the process management object class is created through a configuration management operation command or a seventh software management service interface.

In this embodiment, an instance of the process management object class is created before the software of the managed network function starts to be installed or upgraded through the configuration management operation command or through the seventh software management service interface, so that progress information of the installation or upgradation process of the software is recorded.

The software management process is explained below by way of specific examples.

Example one: a software with all access and mobility management function (AMF) under an existing sub-slice instance, i.e., sliceSubnetl is managed.

The software management process specifically includes described below.
1) an instance swmCap1 of the capability management object class (SwMCapability) is added under the sliceSubnet1 so as to set capability information of a network function such as an AMF, where a setting process is executed by a network management function provider, and each attribute parameter of the capability information contained in the swmCap1 is shown in Table 1.

**Table 1 capability information set by instance of capability management object class**

| Attribute name | Attribute value |
|---|---|
| serial number (Id) | 10001 |
| managed network function (nFInformation) | AMF |
| available software version (swVersionToBeInstalledOfferList) | AMF-V19.10.1; AMF-V19.10.2; AMF-V19.11.0 |

2) an instance swmCtl1 of a control management object class (SwMControl) is created under the swmCap1 to set operation information of a network function such as an AMF so as to start the software management process, and each attribute parameter of the contained operation information is shown in Table 2.

**Table 2 operation information set by instance of control management object class**

| Attribute name | Attribute value |
|---|---|
| serial number (Id) | 0010 |
| managed network function (nFInformation) | AMF |
| software version to be installed or upgraded (swVersion) | AMF-V19.11.0 |
| operation type (OperationType) | immediate operation (immediate installation) |
| operation start time (Start Time) | 00 |

In this example, the swmCtll is contained under swmCapl, and the swmCapl is contained under network sub-slice instance sliceSubnetl, and the capability information is set according to the type of the network function (the network function such as the AMF is the managed network function), therefore the software management process acts on instances of network functions of all AMFs under the management tree contained in the network sub-slice instance. Furthermore, since the operation type is "immediate install", then the installation of the software with instances of network functions of all AMFs under the network sub-slice instance sliceSubnetl is started immediately after the instance swmCap1 of the capability management object class is created.
3) before the installation is started, an instance swmProcessX of a process management object class is generated, and the swmProcessX is used for recording progress information of the software installation process of the instance of the managed network function, such as "software downloading - in progress; software installation - not started; software activation - not started ".

Example two: a software with All AMFs under an existing sub-slice instance, i.e., sliceSubnet2 is managed.

The software management process specifically includes described below.
1) an instance swmCap2 of the capability management object class (SwMCapability) is added under the sliceSubnet2 so as to set capability information of a network function such as an AMF, where a setting process is executed by a network management function provider, and each attribute parameter of the capability information contained in the swmCap2 is shown in Table 3.

**Table 3 capability information set by instance of capability management object class**

| Attribute name | Attribute value |
|---|---|
| serial number (Id) | 10002 |
| managed network function (nFInformation) | AMF |
| available software version (swVersionToBelnstalledOfferList) | AMF-V19.10.1; AMF-V19.10.2 ; AMF-V19.11.0 |
| operation step and breakpoint attribute (including sequence number, step name, and whether to allow the breakpoint to be set before the step, stepsAndStopPointList) | {"1, swDownload, No ", "2, swInstallation, Yes", "3, swActivation, Yes"} |

2) an instance swmCtl2 of a control management object class (SwMControl) is created under the swmCap2 to set operation information of a network function such as an AMF so as to start the software management process, and each attribute parameter of the contained operation information is shown in Table 4.

**Table 4 operation information set by instance of control management object class**

| Attribute name | Attribute value |
|---|---|
| serial number (Id) | 0010 |
| managed network function (nFInformation) | AMF |
| software version to be installed or upgraded (swVersion) | AMF-V19.11.0 |
| operation type (OperationType) | timing operation (timing installation) |
| operation start time (Start Time) | 2020-01-01 |
| | 01:30:00 |

In this example, the swmCtl2 is contained under network sub-slice instance sliceSubnet2, and the operation information is set according to the type of the network function (the network function such as the AMF is the managed network function), therefore the software management process acts on instances of network functions of all AMFs under the management tree contained in the network sub-slice instance. Furthermore, since the operation type is "timing install", then the installation of the software with instances of network functions of all AMFs under the network sub-slice instance sliceSubnet2 is started upon arrival of a specified startup time after the instance swmCap2 of the capability management object class is created.
3) before the installation is started, an instance swmProcessX of a process management object class is generated, and the swmProcessX is used for recording progress information of the software installation process of the instance of the managed network function, such as "software downloading - in progress; software installation - not started; software activation - not started ".

Furthermore, since the breakpoint is set in the operation information, the operation is suspended before both Install and Activate operations are started. In a case where a value of the operation type attribute of the swmCtl2 is configured to a resume operation, the suspended operation continues to be executed. The suspended operation being resumed by setting the operation type attribute of swmCtl2 is for all instances of managed network functions.

In some embodiments, an individual control may be performed for each instance of the managed network function, and an operation type attribute may be added in the SwMPprocess management object class, and a value of the operation type attribute may be "resume a current suspension operation" or "terminate a current software installation" or the like, so that the flexibility of the software management is increased.

According to the above embodiments, the software management object class is created through the configuration management operation command or through the software management service interface, the capability information and the operation information are set, the software management is executed accordingly, the progress information of the software management process may be recorded, and thus the reliability and comprehensiveness of a software for managing the network function are improved.

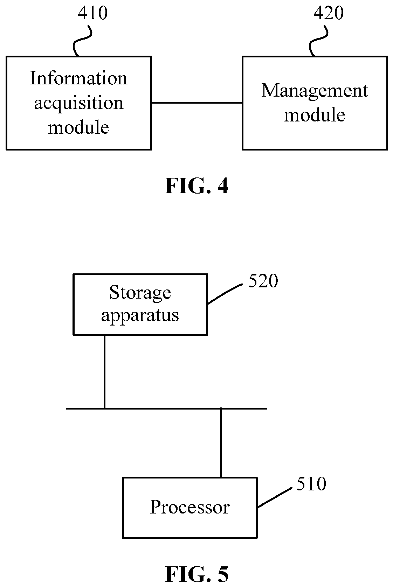

An embodiment of the present application further provides a software management apparatus. FIG. 4 is a schematic structural diagram of a software management apparatus provided in an embodiment. As shown in FIG. 4, the software management apparatus includes an information acquisition module 410 and a management module 420.

The information acquisition module 410 is configured to acquire management information of a software management object class, where the software management object class includes a capability management object class and a control management object class, the management information includes capability information corresponding to a managed network function set based on the capability management object class and operation information corresponding to the managed network function set based on the control management object class.

The management module 420 is configured to manage a software of the managed network function according to the management information of the software management object class.

According to the software management apparatus provided in this embodiment, capability information and operation information corresponding to a managed network function are set through a software management object class, operations such as a software installation or a software upgradation of the managed network function are controlled, and thus the reliable management of the network function software is realized.

In an embodiment, the capability information corresponding to the managed network function includes at least one of: a software version supported by an instance of the managed network function, where a number of software versions is at least one; an installing step or an upgrading step of the software; or a breakpoint attribute before each installing step or each upgrading step, where the breakpoint attribute includes a breakpoint can be set and a breakpoint cannot be set.

In an embodiment, the operation information corresponding to the managed network function includes: a software version to be installed or upgraded; or a type of the managed network function or an instance identifier of the managed network function.

In an embodiment, the operation information corresponding to the managed network function further includes at least one of an operation type or operation start time. The operation type includes at least one of: an immediate operation; a timing operation; a resume operation; or a terminating operation.

In an embodiment, the apparatus further includes a first creation module and a second creation module. The first creation module is configured to, before acquiring the management information of the software management object class, create an instance of the capability management object class under an instance of a network sub-slice, a sub-network, a managed unit or the managed network function through a configuration management operation command, and set the capability information corresponding to the managed network function. The second creation module is configured to, before acquiring the management information of the software management object class, create an instance of the control management object class according to a type of the managed network function or an instance identifier of the managed network function under the instance of the network sub-slice, the sub-network or the managed unit through the configuration management operation command, and set the operation information corresponding to the managed network function.

In an embodiment, the apparatus further includes a third creation module and a fourth creation module. The third creation module is configured to, before acquiring the management information of the software management object class, create an instance of the control management object class through a first software management service interface, and set the operation information corresponding to the managed network function. The fourth creation module is configured to, before acquiring the management information of the software management object class, create an instance of the capability management object class through a second software management service interface, and set the capability information corresponding to the managed network function.

In an embodiment, the management module 420 is specifically configured to perform at least one of: start an installation or upgradation of the software according to the operation information and the capability information through a third software management service interface; resume an installation or upgradation of the software according to the operation information and the capability information through a fourth software management service interface; terminate an installation or upgradation of the software according to the operation information and the capability information through a fifth software management service interface; or fall back an installation or upgradation of the software according to the operation information and the capability information through a sixth software management service interface.

In an embodiment, the software management object class further includes a process management object class, where the process management object class is used for recording progress information of a software management process.

In an embodiment, the apparatus further includes a fifth creation module. The fifth creation module is configured to, before managing the software of the managed network function according to the management information of the software management object class, create an instance of the process management object class through a configuration management operation command or a seventh software management service interface.

The technical details of the software management apparatus proposed in this embodiment, which are not elaborated in this embodiment, may be referred to any of the embodiments of the software management method described above, and this embodiment has the same beneficial effects as the execution of the software management method.

An embodiment of the present application further provides a management device. The software management method may be performed by the software management apparatus, the software management apparatus may be implemented by software and/or hardware, and integrated in the management device.

FIG. 5 is a schematic diagram of a hardware structure of a management device provided in an embodiment. As shown in FIG. 5, the management device provided in this embodiment includes a processor 510 and a storage apparatus 520. A number of processors in the management device may be one or more, one processor 510 is used as an example in FIG. 5, the processor 510 and the storage apparatus 520 in the device may be connected by a bus or in other ways, and the processor 510 and the storage apparatus 520 in the device being connected by the bus is used as an example in FIG. 5.

One or more programs are executed by the one or more processors 510, so that the one or more processors 510 implement the software management method of any of the embodiments described above.

The storage apparatus 520 in the management device serves as a computer-readable storage medium and may be used for storing one or more programs, and the program may be a software program, a computer executable program and a module, such as a program instruction/module corresponding to the software management method in the embodiments of the present disclosure (for example, the module in the software management apparatus shown in FIG. 4, including the information acquisition module 410 and the management module 420). The processor 510 executes various functional applications and data processing of the management device, i.e., implements the software management method in the above-described method embodiment, by executing software programs, instructions, and modules stored in the storage apparatus 520.

The storage apparatus 520 mainly includes a storage program region and a storage data region, where the storage program region may store an operating system, an application program required for at least one function; the storage data region may store data or the like (such as, management information, operation information in the above-described embodiment) created according to the use of the device. Moreover, the storage apparatus 520 may include a high-speed random access memory and may also include a non-volatile memory, such as at least one magnetic disk storage device, flash memory device, or other non-volatile solid-state memory devices. In some instances, the storage apparatus 520 may include a memory remotely disposed with respect to the processor 510, the remote memory may be connected to the management device over a network. Instances of such networks include, but are not limited to, an Internet, an intranet, a local area network, a mobile communication network, and combinations thereof.

Moreover, when one or more programs included in the management device described above are executed by the one or more processors 510, following operations are implemented: management information of a software management object class is acquired, where the software management object class includes a capability management object class and a control management object class, the management information includes capability information corresponding to a managed network function set based on the capability management object class and operation information corresponding to the managed network function set based on the control management object class; and a software of the managed network function is managed according to the management information of the software management object class.

The technical details of the management device proposed in this embodiment, which are not elaborated in this embodiment, may be referred to any of the embodiments of the software management method described above, and this embodiment has the same beneficial effects as the execution of the software management method.

An embodiment of the present application further provides a storage medium containing a computer executable instruction. The computer executable instruction is configured to, when executed by a computer processor, execute the software management method described above.

Those skilled in the art will appreciate from the above description of the implementation manners that the present application may be implemented by means of software and general purpose hardware, and may also be implemented by hardware. Based on this understanding, the technical scheme of the present application may be embodied in the form of a software product, and the computer software product may be stored in a computer-readable storage medium, such as a floppy disk of a computer, a read-only memory (ROM), a random access memory (RAM), a flash memory (FLASH), a hard disk or an optional disk, multiple instructions are included to enable a computer device (which may be a personal computer, a server, or a network device, etc.) to perform the method of any of the embodiments of the present application.

The above description is only an exemplary embodiment of the present application, and is not intended to limit the scope of protection of the present application.

Any block diagram of the logic flow in the accompanying drawings of the present application may represent program steps, or may represent interconnected logic circuits, modules, and functions, or may represent a combination of program steps and logic circuits, modules, and functions. The computer program may be stored on a memory. The memory may be of any type suitable for the local technical environment and may be implemented using any suitable data storage technology, such as, but not limited to, a read-only memory (ROM), a random access memory (RAM), an optical memory device and system (digital versatile disc (DVD) or compact disk (CD)), etc. Computer-readable media may include non-instantaneous storage media. Data processors may be of any type suitable for the local technical environment, such as, but not limited to, general-purpose computers, specialized computers, microprocessors, digital signal processors (DSP), application specific integrated circuits (ASIC), field-programmable gate array (FPGA)), and processors based on multi-core processor architectures.

## Claims

1. A software management method, comprising:
acquiring management information of a software management object class, wherein the software management object class comprises a capability management object class and a control management object class, the management information comprises capability information corresponding to a managed network function set based on the capability management object class and operation information corresponding to the managed network function set based on the control management object class; and
managing a software of the managed network function according to the management information of the software management object class.

2. The method of claim 1, wherein the capability information corresponding to the managed network function comprises at least one of:
at least one software version supported by an instance of the managed network function;
an installing step or an upgrading step of the software; or
a breakpoint attribute before each installing step or each upgrading step, wherein the breakpoint attribute comprises a breakpoint can be set and a breakpoint cannot be set.

3. The method of claim 1, wherein the operation information corresponding to the managed network function comprises:
a software version to be installed or a software version to be upgraded; and
a type of the managed network function or an instance identifier of the managed network function.

4. The method of claim 3, wherein the operation information corresponding to the managed network function further comprises at least one of an operation type or operation start time;
wherein the operation type comprises at least one of: an immediate operation; a timing operation; a resume operation; or a terminating operation.

5. The method of claim 1, wherein before acquiring the management information of the software management object class, the method further comprises:
creating an instance of the capability management object class under an instance of a network sub-slice, a sub-network, a managed unit or the managed network function through a configuration management operation command, and setting the capability information corresponding to the managed network function; and
creating an instance of the control management object class according to a type of the managed network function or an instance identifier of the managed network function under the instance of the network sub-slice, the sub-network or the managed unit through the configuration management operation command, and setting the operation information corresponding to the managed network function.

6. The method of claim 1, wherein before acquiring the management information of the software management object class, the method further comprises:
creating an instance of the control management object class through a first software management service interface, and setting the operation information corresponding to the managed network function; and
creating an instance of the capability management object class through a second software management service interface, and setting the capability information corresponding to the managed network function.

7. The method of claim 1, wherein managing the software of the managed network function according to the management information of the software management object class comprises at least one of:
starting an installation of the software or upgradation of the software according to the operation information and the capability information through a third software management service interface;
resuming an installation of the software or upgradation of the software according to the operation information and the capability information through a fourth software management service interface;
terminating an installation of the software or upgradation of the software according to the operation information and the capability information through a fifth software management service interface; or,
rolling back an installation of the software or upgradation of the software according to the operation information and the capability information through a sixth software management service interface.

8. The method of claim 1, wherein the software management object class further comprises a process management object class, and the process management object class is used for recording progress information of a software management process.

9. The method of claim 8, wherein before managing the software of the managed network function according to the management information of the software management object class, the method further comprises:
creating an instance of the process management object class through a configuration management operation command or a seventh software management service interface.

10. A software management apparatus, comprising:
an information acquisition module, which is configured to acquire management information of a software management object class, where the software management object class comprises a capability management object class and a control management object class, the management information comprises capability information corresponding to a managed network function set based on the capability management object class and operation information corresponding to the managed network function set based on the control management object class; and
a management module, which is configured to manage a software of the managed network function according to the management information of the software management object class.

11. A management device, comprising:
one or more processors; and
a storage apparatus, which is configured to store one or more programs;
wherein the one or more programs, when executed by the one or more processors, cause the one or more processors to implement the software management method of any one of claims 1 to 9.

12. A computer-readable storage medium, storing a computer program, wherein the computer program, when executed by a processor, implements the software management method of any one of claims 1 to 9.
